# EUROPÄISCHE PATENTSCHRIFT

(11) **EP 0 733 530 B1**
(45) Veröffentlichungstag und Bekanntmachung des Hinweises auf die Patenterteilung: **31.07.2002**
(21) Anmeldenummer: 96101129.3
(22) Anmeldetag: 26.01.1996
(51) Int. Cl.: B60T 8/00

(54) **ABS- und/oder ASC-Regelsystem für Kraftfahrzeuge**
ABS and/or anti-slip control system for vehicle
Système de commande ABS et/ou ASC pour véhicules

(30) Priorität: 20.03.1995 DE 19510104
(43) Veröffentlichungstag der Anmeldung: 25.09.1996
(60) Teilanmeldung: 01121052.3
(73) Patentinhaber: Bayerische Motoren Werke Aktiengesellschaft, 80788 München (DE)
(72) Erfinder: Fischer, Gerhard, D-80992 München (DE)

(56) Entgegenhaltungen:
- DE-A- 4 140 239
- LEFFLER H ET AL: "BREMSANLAGE UND SCHLUPF-REGELSYTEME DER NEUEN 7ER-REIHE VON BMW BRAKE AND WHEEL SLIP CONTROL SYSTEMS OF THE NEW 7 SERIES BMW" ATZ AUTOMOBILTECHNISCHE ZEITSCHRIFT, Bd. 97, Nr. 1, 1. Januar 1995, Seiten 8/9, 12-19, XP000486415

## Beschreibung

Die Erfindung bezieht sich auf ein ABS- und/oder ASC-Regelsystem für Kraftfahrzeuge nach dem Oberbegriff des Patentanspruchs 1.

Ein derartiges Regelsystem für Kraftfahrzeuge geht beispielsweise aus dem ATZ-Artikel "Bremsanlage und Schlupfregelsysteme der neuen 7er-Reihe von BMW", Januar 1995, Seite 15 ff., hervor. Dieses bekannte Regelsystem weist eine Sensorvorrichtung zur Erfassung der vier Raddrehzahlen bzw. Radgeschwindigkeiten eines Kraftfahrzeuges auf. Mittels der Signale dieser Sensorvorrichtung wird eine Blockierneigung der Räder bei starken Abbremsmanövern erkannt. Ein Blockieren der Räder wird durch eine übliche ABS-Regelung verhindert. Bei dem unter dem Begriff "Sonder-ABS" erweiterten System wird zu der üblichen ABS-Regelung eine zusätzliche radselektive Beeinflussung des Bremsdruckes ermöglicht. Wird bei Kurvenfahrt vom Fahrer ein leichtes Abbremsen eingeleitet, wird ein gepulster Druckaufbau bzw. eine Verminderung des Bremsdruckes am kurveninneren Vorder- und Hinterrad mittels der ohnehin vorhandenen Aktuatoren eines ABS-/ASC-Regelsystems vorgenommen. Unter einem leichten Abbremsen wird eine Bremsbetätigung derart verstanden, daß an höchstens einem Rad eine ABS-Regelung eingeleitet wird.

Bei diesem bekannten System wird die Kurvenfahrt durch das Überschreiten einer bestimmten Querbeschleunigungsschwelle erkannt, wobei die Querbeschleunigung aus der Fahrgeschwindigkeit und dem Signal eines Lenkwinkelsensors wirklichkeitsnah ermittelt wird. Zwar wird bei diesem bekannten Regelsystem eine sichere Kurven- bzw. Instabilitätserkennung möglich, jedoch ist die Verwendung eines Lenkwinkelsensors hierfür aufwendig und kostenintensiv. Darüber hinaus berücksichtigt das bekannte System bei einer Verminderung des Bremsdruckes lediglich die Kurvenerkennung, nicht jedoch Parameter, die wiederum zu anderen Instabilitäten des Fahrzeuges führen können.

Es ist Aufgabe der Erfindung, ein Regelsystem eingangs genannter Art derart zu verbessern, daß die Bedingungen zur Verminderung des Bremsdruckes an mindestens einem kurveninneren Rad an unterschiedliche Fahrzustände angepaßt werden und daß dabei auf zusätzliche kostenintensive Sensorvorrichtungen verzichtet werden kann.

Diese Aufgabe wird durch die kennzeichnenden Merkmale des Patentanspruchs 1 gelöst.

Gemäß Anspruch 1 wird die Kurvenerkennung erfindungsgemäß durch die Berechnung eines ersten, der Hinterachs-Querbeschleunigung proportionalen Ist-Wertes aus der Differenz der Raddrehzahlen der Hinterräder und/oder eines zweiten, der Vorderachs-Querbeschleunigung proportionalen Ist-Wertes aus der Differenz der Raddrehzahlen der Vorderräder vorgenommen.

Hierbei wird eine Kurvenerkennung ermöglicht, die auf zusätzliche Sensorvorrichtungen, wie z. B. Lenkwinkelsensoren oder Querbeschleunigungssensoren, verzichtet und lediglich ohnehin vorhandene Raddrehzahlsensoren multifunktional ausnützt. Zwar ist eine Kurvenerkennung aufgrund der Differenz von Raddrehzahlen einer Achse weniger genau als eine Kurvenerkennung mittels zusätzlicher kurvenbezogener Parameter (z.B. Lenkwinkelinformationen), jedoch ist bei einer Berechnung vorzugsweise sowohl des der Hinterachs-Querbeschleunigung proportionalen Ist-Wertes als auch des der Vorderachs-Querbeschleunigung proportionalen Ist-Wertes eine Redundanz bei der Ermittlung der Kurvenerkennung und somit eine Korrekturmöglichkeit gegeben. Ergänzend sei darauf hingewiesen, daß unter dem Begriff Kurvenerkennung nicht nur das Ausmaß sondern z.B. auch die Art (Rechtskurve, Linkskurve) einer Kurve verstanden wird.

Vorteilhafterweise wird die Verminderung des Bremsdruckes zumindest an einem kurveninneren Rad wieder aufgehoben, wenn anderenfalls aufgrund einer durch den Fahrer erhöhten Bremskraft am vorderen, kurveninneren Rad die ABS-Regelung eingeschaltet werden würde.

Diese erfindungsgemäße Maßnahme berücksichtigt insbesondere den Fahrzustand, bei dem beispielsweise der Fahrer während einer Kurvenfahrt nochmals eine Erhöhung der Bremskraft vorgibt. Würde in dieser Situation eine Verminderung des Bremsdruckes beibehalten werden, könnte dies im Extremfall ein Drehen des Kraftfahrzeuges entgegen der Kurvenrichtung erzeugen. Dies wird durch die erfindungsgemäße Maßnahme verhindert.

Zusätzlich oder alternativ wird die Verminderung des Bremsdruckes zumindest an einem kurveninneren Rad wieder aufgehoben, wenn die Verzögerung des hinteren kurveninneren Rades eine vorgegebene Schwelle überschreitet.

Hierbei wird das Ausüben einer erhöhten Bremskraft durch den Fahrer anhand der ermittelten Verzögerung des hinteren, kurveninneren Rades festgestellt. Die Verzögerung des hinteren, kurveninneren Rades kann besonders einfach durch die Ableitung der ohnehin ermittelten Raddrehzahlen bzw. Radgeschwindigkeiten ermittelt werden.

Die Unteransprüche 2, 3, 4 und 5 sind vorteilhafte Weiterbildungen der Erfindung.

So berücksichtigt beispielsweise der Unteranspruch 2 das unterschiedliche Verhalten der berechneten der Hinterachs-Querbeschleunigung und der Vorderachs-Querbeschleunigung proportionalen Ist-Werte, insbesondere zu Beginn der Kurvenfahrt.
Wird z.B. zu Beginn der Kurvenfahrt eine Betätigung der Bremse noch nicht vorgenommen, ist üblicherweise der Verlauf des ersten, der Hinterachs-Querbeschleunigung proportionalen Ist-Wertes steiler als der Verlauf des zweiten, der Vorderachs-Querbeschleunigung proportionalen Ist-Wertes. Für diesen Fall ist zur Kurvenerkennung vor Betätigung der Bremse beispielsweise der erste Schwell-Wert größer als der zweite Schwell-Wert.

Der Gegenstand des Unteranspruchs 3 berücksichtigt die Situation, bei der zu Beginn einer Bremsbetätigung noch keine Kurvenerkennung stattgefunden hat. In diesem Fall kann auch berücksichtigt werden, daß eine Kurvenfahrt nach Betätigung der Bremse im allgemeinen ähnliche Verläufe der der Hinterachs- und Vorderachs-Querbeschleunigung proportionalen Ist-Werte hervorruft. Somit können beispielsweise der dritte und der vierte Schwell-Wert gleich sein.

Der Gegenstand des Unteranspruchs 4 beschäftigt sich mit einer Bedingung zum Aufheben der Verminderung des Bremsdruckes, wenn das Ende einer Kurve erreicht ist. Diesem Erfindungsgegenstand liegt der Gedanke zugrunde, daß insbesondere der Verlauf des der Vorderachs-Querbeschleunigung proportionalen Ist-Wertes den realen Kurvenverlauf besonders wirklichkeitsnah wiedergibt. Somit wird unabhängig von dem der Hinterachs-Querbeschleunigung proportionalen Ist-Wert das Ende einer Kurve dann erkannt, wenn der der Vorderachs-Querbeschleunigung proportionale Ist-Wert eine vorgegebene Schwelle (fünfter Schwell-Wert) unterschritten hat. Durch diese erfindungsgemäße Maßnahme wird verhindert, daß die Verminderung des Bremsdruckes zumindest an einem kurveninneren Rad nicht zu lange vorgenommen wird, so daß beispielsweise anstelle des Eindrehens des Kraftfahrzeuges ein Ausdrehen, d. h. eine andersartige Instabilität, auftritt.

Gemäß der Weiterbildung nach Anspruch 5 wird eine Maßnahme ergriffen, durch die die Wirkung der Verminderung des Bremsdruckes zumindest an einem kurveninneren Rad bei einer Bedingung zum Aufheben dieser Verminderung möglichst schnell aufgehoben wird.

Ergänzend wird darauf hingewiesen, daß vorzugsweise die Verminderung des Bremsdruckes schlagartig eingeschaltet, jedoch zeitverzögert und möglichst komfortabel wieder ausgeschaltet wird.

In der Zeichnung ist ein Ausführungsbeispiel der Erfindung dargestellt. Es zeigt
- Figur 1: schematisch ein Fahrzeug während einer Kurvenfahrt mit der Bezeichnung der kurveninneren und kurvenäußeren Räder und
- Figur 2: eine erste erfindungsgemäße Kurvenerkennung vor der Betätigung einer Bremse und eine zweite erfindungsgemäße Kurvenerkennung nach der Betätigung der Bremse.

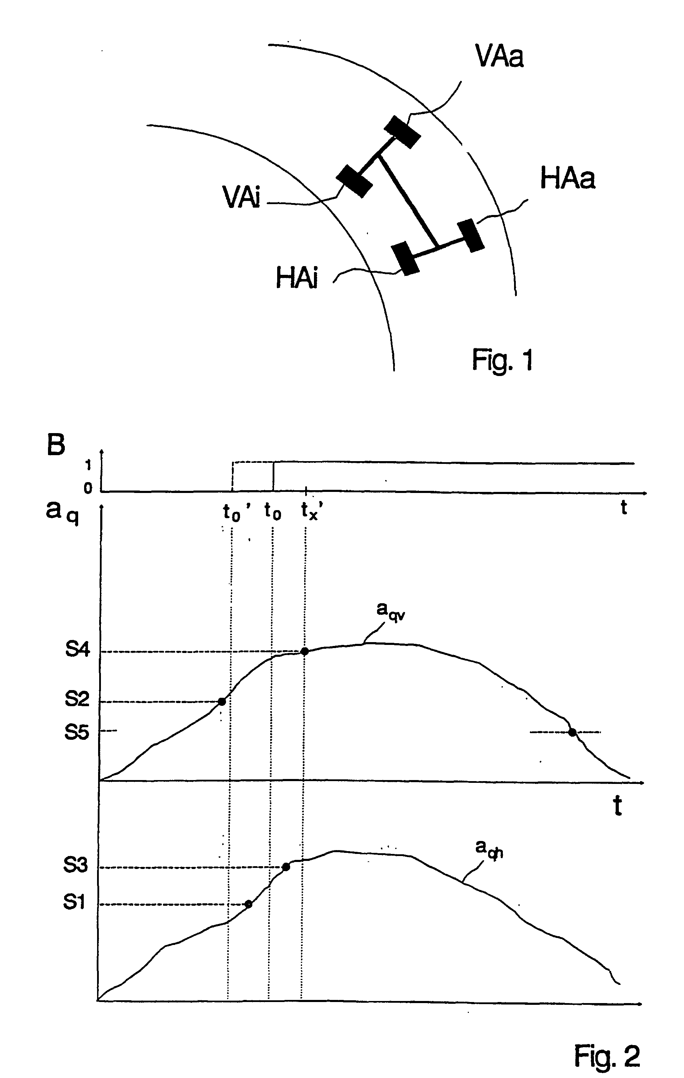

Figur 1 zeigt schematisch ein Kraftfahrzeug, das eine Linkskurve befährt. Hierbei ist das vordere, kurveninnere Rad VAᵢ das linke Vorderrad. Entsprechend wäre bei einer Rechtskurve das vordere, kurveninnere Rad das rechte Vorderrad. Im dargestellten Beispiel einer Linkskurve ist das hintere, kurveninnere Rad HAᵢ das linke Hinterrad. Das vordere, kurvenäußere Rad VAₐ und das hintere, kurvenäußere Rad HAₐ sind die jeweils rechten Räder der Vorder- und der Hinterachse.

Figur 2 zeigt im oberen Diagramm die Betätigung der Bremse am Beispiel der Betätigung des Bremslichtschalters B. Die beiden unteren Diagramme in Figur 2 zeigen die Querbeschleunigungen a_{q} über der Zeit t. Dabei ist zum einen der Verlauf des der Hinterachs-Querbeschleunigung proportionalen Ist-Wertes a_{qh} und zum anderen der Verlauf des der Vorderachs-Querbeschleunigung proportionalen Ist-Wertes a_{qv} dargestellt.

Die Erfindung ergreift entsprechend der vorliegenden Bedingungen folgende Maßnahmen:

Zunächst sei ein erster Fall betrachtet, in dem eine Bremsbetätigung zum Zeitpunkt t₀ auftritt. Eine Bremsbetätigung wird daran erkannt, daß das Signal des Bremslichtschalters B von "0", d. h. ausgeschalteter Bremslichtschalter, in "1", d. h. eingeschalteter Bremslichtschalter, übergeht. Zum Zeitpunkt t₀ ist bereits sowohl der erste Schwell-Wert S1 von dem der Hinterachs-Querbeschleunigung proportionalen Ist-Wert a_{qh} als auch der zweite Schwell-Wert S2 von dem der Vorderachs-Querbeschleunigung proportionalen Ist-Wert a_{qv} überschritten. Somit findet bereits zum Zeitpunkt t₀, d. h. beim Einleiten der Bremsbetätigung, eine Verminderung des Bremsdruckes mittels der ohnehin vorhandenen Aktuatoren zur radselektiven Bremsbeeinflussung zumindest am hinteren, kurveninneren Rad HAᵢ statt. Vorzugsweise wird dabei der durch die Bremse vorgegebene Bremsdruck lediglich auf die übrigen drei Räder VAᵢ, VAₐ und HAₐ ausgeübt. Diese Verminderung des Bremsdruckes wird im dargestellten Beispiel in Figur 2 so lange beibehalten, bis der der Vorderachs-Querbeschleunigung proportionale Ist-Wert a_{qv} den unteren Schwell-Wert S5 unterschritten hat. Daraufhin wird der Bremsdruck im hinteren, kurveninneren Rad HAᵢ vorzugsweise langsam an den Bremsdruck des hinteren, kurvenäußeren Rades HAₐ angeglichen.

Würde beispielsweise nach dem Zeitpunkt t₀ und vor dem Unterschreiten des Schwell-Wertes S5 durch den Ist-Wert a_{qv} eine Erhöhung der Bremskraft ausgeübt werden, so daß entweder eine Blockierneigung des vorderen, kurveninneren Rades VAᵢ aufgrund eines Einschaltsignals der ABS-Regelung erkannt werden würde und/oder die Verzögerung des hinteren, kurveninneren Rades HAᵢ eine vorgegebene Schwelle überschreiten würde, würde die Verminderung des Bremsdruckes im hinteren, kurveninneren Rad HAᵢ vor der Unterschreitung des S5-Schwell-Wertes aufgehoben werden. Vorzugsweise wird beim Aufheben der Verminderung des Bremsdruckes nicht nur der Druck im hinteren, kurveninneren Rad HAᵢ aufgebaut, sondern auch - beispielsweise für eine vorgegebene Zeit - der Bremsdruck im vorderen, kurvenäußeren Rad VAₐ und/oder im hinteren, kurvenäußeren Rad HAₐ kurzzeitig abgebaut. Hierdurch wird die Wirkung, die durch die Verminderung des Bremsdruckes zumindest im hinteren, kurveninneren Rad HAᵢ erzeugt wird, möglichst schnell aber komfortabel beseitigt.

In einem zweiten Fall soll die Bremsbetätigung zum Zeitpunkt t₀' erfolgen, d. h. bevor zumindest einer der beiden Schwell-Werte S1 oder S2 durch den ihm zugeordneten Ist-Wert a_{qh} oder a_{qv} - im dargestellten Fall der Schwell-Wert S1 durch a_{qh} - überschritten ist. Dieser Fahrzustand tritt besonders dann auf, wenn ein Fahrer die Bremse bereits kurz vor der Kurvenfahrt oder gleich zu Beginn der Kurvenfahrt betätigt. In diesem Fall findet zum Zeitpunkt t₀' noch keine Kurvenerkennung und damit noch keine Verminderung des Bremsdruckes statt.

Daraufhin werden für die Kurvenerkennung neue Schwell-Werte, S3 für den Ist-Wert a_{qh} bzw. S4 für den Ist-Wert a_{qv}, vorgegeben. Der dritte Schwell-Wert S3 ist bezüglich des ersten Schwell-Wertes S1 und der vierte Schwell-Wert S4 bezüglich des zweiten Schwell-Wertes S2 erhöht. Beispielsweise können jedoch die Schwell-Werte S3 und S4 gleich sein.
Vorzugsweise wird im zweiten Fall zur Ermittlung des Ist-Wertes a_{qv} ein Tiefpaßfilter vorgeschaltet. Werden zur Ermittlung beider Ist-Werte a_{qh} und a_{qv} Tiefpaßfilter vorgeschaltet, ist zumindest die Einschwingzeit des Tiefpaßfilters für den Ist-Wert a_{qh} viel kleiner als die Einschwingzeit des Tiefpaßfilters für den Ist-Wert a_{qv}.

Zum Zeitpunkt tₓ' hat sowohl der der Hinterachs-Querbeschleunigung proportionale Ist-Wert a_{qh} den dritten Schwell-Wert S3 als auch der der Vorderachs-Querbeschleunigung proportionale Ist-Wert a_{qv} den vierten Schwell-Wert S4 überschritten. Eine Kurvenerkennung und damit eine Verminderung des Bremsdruckes an mindestens einem kurveninneren Rad VAᵢ und/oder HAᵢ wird demnach in diesem zweiten Fall erst zum Zeitpunkt tₓ' vorgenommen. Die Verminderung des Bremsdruckes kann anschließend entsprechend den oben genannten Beispielen wieder aufgehoben werden.

Mögliche weitere vorteilhafte Ausgestaltungen der Erfindung beziehen sich auf weitere Bedingungen zur Verminderung des Bremsdruckes am hinteren kurveninneren Rad HAᵢ und/oder am vorderen kurveninneren Rad VAᵢ:

So wird eine Verminderung des Bremsdruckes an nur einem kurveninneren Rad vorzugsweise am hinteren kurveninneren Rad HAᵢ vorgenommen. Eine Verminderung des Bremsdruckes am vorderen kurveninneren Rad VAᵢ wird nur im Sinne einer ABS-Regelung bei niedrigerem Schlupf als im Normalfall einer ABS-Regelung vorgenommen. Beispielsweise wird der niedrigere Schlupf durch eine reduzierte Anregelschwelle bezogen auf die Differenz der Fahrzeuggeschwindigkeit und der Radgeschwindigkeit des vorderen kurveninneren Rades VAᵢ definiert.

Weiterhin kann eine Anfangsbedingung für das Einschalten des erfindungsgemäßen ABS/ASC-Regelsystems vorgegeben werden. Eine mögliche Anfangsbedingung ist das Überschreiten einer vorgegebenen Fahrzeuggeschwindigkeitsschwelle (z.B. 40 km/h) und/oder das Unterschreiten einer Schwelle (z.B. S1, S2, S3 oder S4) durch den der Vorderachs- oder Hinterächs- Querbeschleunigung proportionalen Ist-Wert für eine vorgegebene Zeit (z.B. 10 s).

Auch kann zur Fehlererkennung eine Plausibilitätsüberwachung durchgeführt werden. Beispielsweise wird ein Fehler erkannt, wenn oberhalb einer vorgegebenen Fahrzeuggeschwindigkeit (z.B. 40 km/h) für eine vorgegebene Zeit (z.B. 20 s) der der Vorderachs- oder Hinterachs- Querbeschleunigung proportionale Ist-Wert eine vorgegebene obere Schwelle (z.B. S1, S2, S3 oder S4) überschreitet.

Mit diesen erfindungsgemäßen Ausführungsbeispielen kann auf kostengünstige Weise eine optimale fahrzustandsadaptierte Stabilitätserhöhung erreicht werden.

## Patentansprüche

1. ABS- und/oder ASC-Regelsystem für Kraftfahrzeuge mit einer Sensorvorrichtung zur Erfassung von Raddrehzahlen, mit einer Auswerteeinheit zur Kurvenerkennung und mit Aktuatoren zur Verminderung des Bremsdruckes an mindestens einem kurveninneren Rad bei Kurvenerkennung und betätigter Bremse derart, daß an höchstens einem Rad eine ABS-Regelung eingeleitet wird, **dadurch gekennzeichnet, daß** die Kurvenerkennung durch Berechnung eines ersten, der Hinterachs-Querbeschleunigung proportionalen Ist-Wertes (a_{qh}) aus der Differenz der Raddrehzahlen der Hinterräder (HAₐ, HAᵢ) und/oder eines zweiten, der Vorderachs-Querbeschleunigung proportionalen Ist-Wertes (a_{qv}) aus der Differenz der Raddrehzahlen der Vorderräder (VAₐ, VAᵢ) vorgenommen wird.

2. ABS- und/oder ASC-Regelsystem nach Anspruch 1, **dadurch gekennzeichnet, daß** die Kurvenerkennung stattfindet, wenn der Betrag des ersten Ist-Wertes (a_{qh}) einen vorgegebenenen ersten Schwell-Wert (S1) und der Betrag des zweiten Ist-Wertes (a_{qv}) einen vorgegebenenen zweiten Schwell-Wert (S2) überschreitet.

3. ABS- und/oder ASC-Regelsystem nach Anspruch 1 oder 2, **dadurch gekennzeichnet, daß** die Kurvenerkennung stattfindet, wenn der Betrag des ersten Ist-Wertes (a_{qh}) einen bezüglich des ersten Schwell-Wertes (S1) höheren dritten Schwell-Wert (S3) und der Betrag des zweiten Ist-Wertes (a_{qv}) einen bezüglich des zweiten Schwell-Wertes (S2) höheren vierten Schwell-Wert (S4) überschreitet, falls zum Zeitpunkt (t₀') der Betätigung der Bremse (B) noch keine Kurvenerkennung stattgefunden hat.

4. ABS- und/oder ASC-Regelsystem nach einem der Ansprüche 1 bis 3, **dadurch gekennzeichnet, daß** die Verminderung des Bremsdruckes zumindest an einem kurveninneren Rad (HAᵢ, VAᵢ) wieder aufgehoben wird, wenn der zweite, der Vorderachs-Querbeschleunigung proportionale Ist-Wert (a_{qv}) einen fünften Schwell-Wert (S5) unterschreitet.

5. ABS- und/oder ASC-Regelsystem nach Anspruch 4, **dadurch gekennzeichnet, daß** für eine vorgegebene Zeit eine Verminderung des Bremsdruckes im vorderen, kurvenäußeren Rad (VAₐ) und/oder im hinteren, kurvenäußeren Rad (HAₐ) vorgenommen wird, während die Verminderung des Bremsdruckes an mindestens einem kurveninneren Rad (HAᵢ, VAᵢ) wieder aufgehoben wird.

## Claims

1. An ABS and/or ASC control system for motor vehicles with a sensor device to detect wheel revolutions, with an evaluating unit to detect cornering and with actuators to lessen the brake pressure on at least one wheel on the inside of the curve when cornering is detected and with the brakes operated such that on at most one wheel an ABS regulation is engaged, **characterised in that** the detection of cornering is undertaken by calculation of a first actual value (a_{qh}) proportional to the lateral acceleration of the rear axle from the difference between the wheel revolutions of the rear wheels (HAₐ, HAᵢ) and/or a second actual value (a_{qv}) proportional to the lateral acceleration of the front wheels (VAₐ, VAᵢ).

2. An ABS and/or ASC control system according to Claim 1, **characterised in that** the detection of cornering takes place when the level of the first actual value (a_{qh}) exceeds a predetermined first threshold value (S1) and the level of the second actual value (a_{qv}) exceeds a predetermined second threshold value (S2).

3. An ABS and/or ASC control system according to Claim 1 or Claim 2, **characterised in that** the detection of cornering takes place when the level of the first actual value (a_{qh}) exceeds a higher third threshold value (S3), as referred to the first threshold value (S1) and the level of the second actual value (a_{qv}) exceeds a higher fourth threshold value (S4), as referred to the second threshold value (S2), in the event that at the time (t₀') of the operation of the brakes (B) no detection of cornering has yet taken place.

4. An ABS and/or ASC control system according to one of the Claims 1 3, **characterised in that** the lessening of the brake pressure on at least one wheel (HAᵢ, VAᵢ) on the inside of the curve is again removed when the second actual value (a_{qv}) proportional to the front axle lateral acceleration falls below a fifth threshold value (S5).

5. An ABS and/or ASC control system according to Claim 4, **characterised in that** a lessening of the brake pressure on the front wheel (VAₐ) on the outside of the curve and/or on the rear wheel HAₐ) on the outside of the curve is made whilst the lessening of the brake pressure o' at least one wheel (HAᵢ, VAᵢ) is being again removed.

## Revendications

1. Système de régulation ABS et/ou ASC pour des véhicules automobiles, comportant un dispositif de capteurs pour détecter la vitesse de rotation des roues, une unité d'exploitation pour détecter une courbe et des actionneurs pour réduire la pression de frein d'au moins une roue intérieure à la courbe, lors de la détection d'une courbe et l'actionnement des freins, de façon à commencer une régulation ABS au maximum sur une roue,
**caractérisé en ce que**
on détecte la courbe en calculant une première valeur réelle (a_{qh}) proportionnelle à l'accélération transversale de l'essieu arrière à partir de la différence de la vitesse de rotation des roues arrière (HAₐ, HAᵢ) et/ou d'une seconde valeur réelle (a_{qv}) proportionnelle à l'accélération transversale de l'essieu avant à partir de la différence de la vitesse de rotation des roues avant (VAₐ, Vaᵢ).

2. Système de régulation ABS et/ou ASC selon la revendication 1,
**caractérisé en ce qu'**
on détecte une courbe si l'amplitude de la première valeur réelle (a_{qh}) dépasse un premier seuil (S1) prédéterminé et si l'amplitude de la seconde valeur réelle (a_{qv}) dépasse un second seuil prédéterminé (S2).

3. Système de régulation ABS et/ou ASC selon la revendication 1 ou 2,
**caractérisé en ce qu'**
on détecte la courbe si l'amplitude de la première valeur réelle (a_{qh}) dépasse un troisième seuil (S3) plus haut que le premier seuil (S1) et si l'amplitude de la seconde valeur réelle (a_{qv}) dépasse un quatrième seuil (S4) plus haut que le second seuil (S2), si à l'instant (t₀') de l'actionnement du frein (B) il n'y a pas encore eu de détection de courbe.

4. Système de régulation ABS et/ou ASC selon l'une des revendications 1 à 3,
**caractérisé en ce qu'**
on neutralise de nouveau la réduction de la pression de frein d'au moins une roue intérieure à la courbe (HAᵢ, VAᵢ) si la seconde valeur réelle (a_{qv}) proportionnelle à l'accélération transversale de l'essieu avant passe sous un cinquième seuil (S5).

5. Système de régulation ABS et/ou ASC selon la revendication 4,
**caractérisé en ce qu'**
on effectue pendant une durée prédéterminée, une réduction de la pression de frein de la roue avant extérieure à la courbe (VAₐ) et/ou de la roue arrière extérieure à la courbe (HAₐ) pendant que l'on neutralise la réduction de la pression de frein d'au moins une roue intérieure à la courbe (HAᵢ, VAᵢ).
